(19) Europäisches Patentamt
European Patent Office
Office européen des brevets

(11) Veröffentlichungsnummer: **0 148 295**
**B1**

# (12) EUROPÄISCHE PATENTSCHRIFT

(45) Veröffentlichungstag der Patentschrift: **25.01.89**

(51) Int. Cl.⁴: **C 08 F 8/30**

(21) Anmeldenummer: **84100119.1**

(22) Anmeldetag: **09.01.84**

## (54) Acrylnitril-Copolymere und Verfahren zu ihrer Herstellung.

(43) Veröffentlichungstag der Anmeldung:
**17.07.85 Patentblatt 85/29**

(45) Bekanntmachung des Hinweises auf die Patenterteilung:
**25.01.89 Patentblatt 89/4**

(84) Benannte Vertragsstaaten:
**AT BE DE FR GB IT NL**

(56) Entgegenhaltungen:
**DE-A-2 200 457**
**US-A-3 006 756**

**CHEMICAL ABSTRACTS, Band 64, 1966, nr. 12826h, COLUMBUS OHIO (US), Y. NOMURA et al.: "Reaction of vinyl polymers containing nitrile groups with dicyandiamide"**

(73) Patentinhaber: **Akademie der Wissenschaften der DDR, Rudower Chaussee 5, DDR- 1199 Berlin (DD)**

(72) Erfinder: **Gohlke, Ulrich, Dr., Dobrowolskistrasse 30, DDR- 1502 Babelsberg (DD)**
Erfinder: **Dietrich, Klaus, Dr., Bodestrasse 2d, DDR- 1530 Teltow (DD)**
Erfinder: **Bischoff, Carmen, Ernst- Thälmann-Strasse 117 d, DDR- 1530 Teltow (DD)**
Erfinder: **Versäumer, Heinz, Philipp- Müller- Allee 97, DDR- 1530 Teltow (DD)**
Erfinder: **Hartig, Siegfried, Dr., Martin- Andersen-Nexö- Strasse 15, DDR- 1832 Premnitz (DD)**
Erfinder: **Wolf, Klaus- Friedrich, Dr., Hermann-Löns- Strasse 4, DDR- 1830 Rathenow (DD)**
Erfinder: **Liebener, Ulrich, Otto- Nuschke- Strasse 27, DDR- 1800 Brandenburg (DD)**
Erfinder: **Rudolf, Johannes, Johannes- R.- Becher-Strasse 2, DDR- 1832 Premnitz (DD)**

(74) Vertreter: **Patentanwälte Beetz sen. - Beetz jun. Timpe - Siegfried - Schmitt- Fumian, Steinsdorfstrasse 10, D-8000 München 22 (DE)**

EP 0 148 295 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft neue Acrylnitril-Copolymere und ein Verfahren zu ihrer Herstellung durch polymeranaloge Umsetzung von Polyacrylnitril. Die neuen Acrylnitril-Copolymere sind vorteilhaft als Flockungsmittel einsetzbar.

Copolymere sind dadurch charakterisiert, daß entlang einer Kohlenstoffrückgratkette unterschiedliche chemische Struktureinheiten in einem Polymer vereinigt sihd. Solche Copolymere können durch Polymerisation polymerisationsfähiger Monomerer hergestellt werden. Copolymere aus zumeist zwei, seltener aus drei ungesättigten Monomeren sind bekannt. Acrylnitril-Copolymere dieses Typs sind z. B, in "The Chemistry of Acrylonitrile" (Firmenschrift der American Cyanamid Company, Bacon Press, Inc., New York 1951 und in US-PS 2 726 229) beschrieben. Acrylnitril-Copolymere mit geringem Anteil an Comonomeren werden in Houben Weyl, "Die Methoden der organischen Chemie" Band 14, S. 998 aufgeführt. Der Zusatz der Comonomere bei der Polymerisation des Acrylnitrils dient hier der Verbesserung der Anfärbbarkeit von Polyacrylnitrilfasern. Die Copolymerisation von mehr als 3 Monomeren, die zum Teil sogar untereinander unter Salzbildung reagieren, wurde bisher nicht beschrieben.

Copolymerisationen sind generell aufwendige Polymerbildungsreaktionen.

Zur chemischen Modifizierung von Polyacrylnitril wurde von Valk und Mitarbeitern eine Übersicht veröffentlicht. (Forschungsberichte des Landes Nordrhein-Westfalen Nr. 2212 Westdeutscher Verlag Opladen 1971). Die in dieser Arbeit genannten Polymere werden zumeist so hergestellt, daß sie ein technisch günstigeres Eigenschaftsbild der Faserstoffe aus Polyacrylnitril bewirken.

Weiterhin sind Versuche zur polymeranalogen Umsetzung von Polyacrylnitril mit Dicyandiamid in alkalischer Dimethylformamidlösung bekannt. (Y. Iwakura und Mitarbeiter, Bull. chem. Soc. Japan 38 (1965) 1820). Bei dieser Reaktion wurde festgestellt, daß sich das Reaktionsgemisch nach kurzer Zeit stark verfärbte, gelierte und das rot gefärbte Reaktionsprodukt nicht weiter verarbeitbar war.

Unvernetzte Copolymere wurden von Iwakura und Mitarbeitern (Bull. chem. Soc. Japan 38 (1965) 1820) ererhalten, wenn anstelle von reinem Polyacrylnitril für diese Reaktion Acrylnitril-Styren-Copolymere eingesetzt werden. Diese Umsetzungsprodukte sind farblos.

Die vorliegende Erfindung hat das Ziel, neue Acrylnitril-Copolymere und ein einfaches Verfahren zu ihrer Herstellung zu entwickeln.

Das Verfahren soll dadurch ökonomisch vorteilhaft sein, daß auch Polyacrylnitril niedrigerer Qualität und Polyacrylnitrilabfall verwendet werden kann. Die Aufgabe der Erfindung besteht darin, aus einem durch polymeranaloge Umsetzung von Polyacrylnitril mit Dicyandiamid in alkalischer Lösung gewonnenen, bisher nicht verwendbaren Polymer neue Acrylnitril -Copolymere mit vorteilhaften Eigenschaften, die sich z. B. für den Einsatz als Flockungsmittel eignen, herzustellen.

Die Aufgabe wird gelöst, indem aus dem Umsetzungsprodukt aus Polyacrylnitril und Dicyandiamid in alkalischer Lösung und einer speziellen Verfahrensweise ein neues Acrylnitril-Copolymer der allgemeinen Formel I im solartigen Zustand erhalten wird, das durch Säurebehandlung in den gelösten Zustand übergeht.

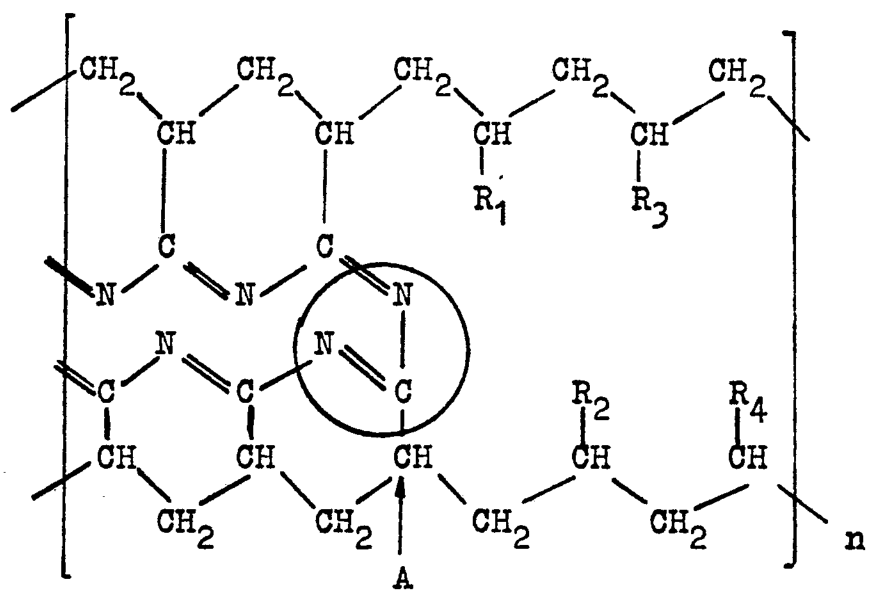

Das neue Acrylnitril-Copolymere besteht aus teilweise zyklisierten Polyacrylnitrileinheiten, die über

= N - C = N -
       |

Strukturen (vgl. Formel I mit A bezeichnete Teilstruktur) verzweigt sind, wobei der Polymerisationsgrad n = 5 bis 150 beträgt.

$R_1$ gibt die Nitrilgruppe - C ≡ N,
$R_2$ die Guanamingruppe

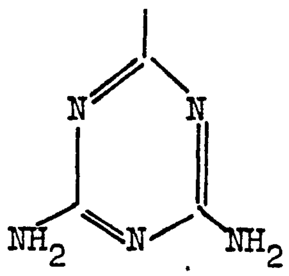

oder

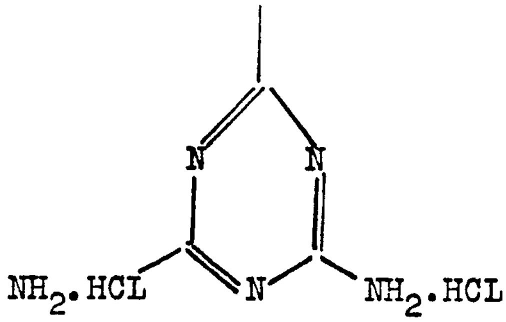

und $R_3$ die N-Carbimidoyl-N'-cyanguanguanidin-Gruppe

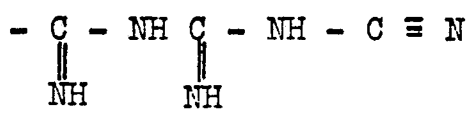

$R_4$ steht für Carbonamidgruppen - $CONH_2$ und Carboxylgruppen - COOH.

Das neue Acrylnitril-Copolymer liegt im solartigen oder im gelösten Zustand vor.

Die Substanz ist IR-spektroskopisch eindeutig zu charakterisieren, die funktionellen Strukturen sind an dem Grundgerüst nachweisbar.

Das Verfahren zur Herstellung des neuen Copolymers läßt sich vorteilhafterweise so durchführen, daß Polyacrylnitril in Dimethylformamid oder in einem anderen geeigneten Lösungsmittel unter Erwärmen gelöst und mit Dicyandiamid umgesetzt wird.

Dazu wird eine Lösung von Polyacrylnitril und Dicyandiamid in Dimethylformamid mit einer konzentrierten Lösung von Alkalihydroxid in Wasser versetzt und erwärmt.

Innerhalb kurzer Zeit färbt sich das Reaktionsgut braun bis rot und die gesamte Reaktionsmasse geliert zu einem festen Gel.

Überraschenderweise wurde festgestellt, daß durch intensive und langandauernde Scherbeanspruchung, vorzugsweise Rühren, in Gegenwart hoher Alkalikonzentrationen und Temperaturen zwischen 293 K und dem Siedepunkt des Polymerlösungsmittels, vorzugsweise 373 K, der Gelzustand der Reaktionsmasse zerstört wird und das Gel in einen solartigen Zustand überführt wird. Die benötigte Alkalimenge beträgt > 1 Masse-%, vorzugsweise > 10 Masse-% bezogen auf den Polyacrylnitrilgehalt der Lösung.

Nach Ablauf der Reaktionszeit, die bis zu 100 h betragen kann und von der Reaktionstemperatur abhängt, wird der gesamte Reaktionsansatz mit einer organischen oder anorganischen Säure oder einem sauren Salz in wäßriger Lösung versetzt, wodurch eine gewünschte verbesserte Zugänglichkeit und Wirksamkeit der Carboxylgruppen bei weitgehender Verhinderung eines Polymerabbaus bewirkt wird.

Die Menge der Säure muß zwischen äquimolar und einem bis zu 100fachen molaren Überschuß, bezogen auf die Zur Umsetzung des Polyacrylnitrils mit Dicyandiamid verwendete Menge an Basen, gewählt werden.

Die Zeitdauer der Säurebehandlung kann bis zu 10 h betragen. Die Temperatur beeinflußt ebenfalls die Reaktion.

Sie kann zwischen 323 K und dem Siedepunkt des Lösungsmittelgemisches variiert werden.

Die Säurebehandlung kann auch in emaillierten Autoklaven unter Druck bei einer Temperatur von 573 K durchgeführt werden.

Nach Ablauf der Reaktion fällt das neue Acrylnitril -Copolymer als gelbe Substanz beim Abkühlen als Hydrochlorid, vollständig nach Neutralisation mit wäßriger Natronlauge, aus und wird in bekannter Weise abfiltriert, getrocknet und gegebenenfalls gemahlen. Das Ergebnis der Säurebehandlung kann anhand von potentiometrischen Titrationen der funktionellen Gruppen und anhand der IR-Spektren verfolgt werden. Das Polymere enthält an dem Kohlenstoffkettengerüst 4.6-Diamino-1.3.5-triazin-, Carbonsäure-, Carbonamid-, Nitril - sowie weitere basische Gruppen.

Die Gruppen garantieren chemische Reaktivität. Vorteilhaft ist, daß für das vorgeschlagene Verfahren sowohl Acrylnitril-Copolymere als auch Polyacrylnitril niedriger Qualität eingesetzt werden können.

Die nachfolgenden Beispiele erläutern das Wesen der Erfindung.

**Ausführungsbeispiele**

**Beispiel 1**

Herstellung eines neuen Acrylnitril-Copolymeren. 10 Gewichtsteile Polyacrylnitril und 5 Gewichtsteile Dicyandiamid werden unter Rühren und Erwärmen im Wasserbad in 100 Gewichtsteilen Dimethylformamid gelöst. Sobald vollständige Lösung eingetreten ist, wird die farblose Polymerlösung, deren Temperatur 358 K beträgt, mit 3 Gewichtsteilen Kaliumhydroxid in 3 Gewichtsteilen Wasser versetzt. Sofort tritt eine Braunfärbung auf, die nach wenigen Minuten von selbständigem Gelieren der Reaktionsmasse begleitet wird. Unter fortgesetztem Rühren bei 373 K homogenisiert sich das Gel zu einer Suspension. Diese Suspension wird 4 h bei 368 K gerührt. Anschließend wird die Suspension einer Behandlung mit Salzsäure unterzogen, indem 62 Gewichtsteile einer 8,5 %-igen Salzsäure im Verlauf von 5 min zugesetzt werden. Beim Wiedererwärmen auf 368 K löst sich die Suspension unter Farbaufhellung nach Orange. Aus der Lösung fällt beim Abkühlen, vollständig nach Neutralisation mit wäßriger Natronlauge, die leuchtend gelbe Copolymer-Substanz aus, die abfiltriert wird. Nach Trocknen bei 333 K im Vakuum und 2stündigem Mahlen in der Kugelmühle erhält man ein gelbes Pulver.

**Beispiel 2**

Umsetzung von 10 Gewichtsteilen Polyacrylnitril-Copolymer mit 5 Gewichtsteilen Dicyandiamid nach Beispiel 1 sowie Säurebehandlung des Reaktionsproduktes mit dem Unterschied, daß 62 Gewichtsteile 20 %-iger Salzsäure verwendet werden. Nach dem Trocknen und Mahlen wird ein leuchtend gelbes Pulver erhalten.

**Beispiel 3**

Umsetzung von 10 Gewichtsteilen Polyacrylnitril und 5 Gewichtsteilen Dicyandiamid nach Beispiel 1 mit dem Unterschied, daß die Zeitdauer der Behandlung mit Säure auf 10 h ausgedehnt wird. Nach dem Trocknen und Mahlen wird ein leuchtend gelbes Pulver erhalten.

**Beispiel 4**

Umsetzung von 10 Gewichtsteilen Polyacrylnitril und 5 Gewichtsteilen Dicyandiamid nach Beispiel 1 mit dem Unterschied, daß die Temperatur bei Behandlung mit Säure auf 573 K erhöht wird, wobei die Umsetzung in einem emaillierten Autoklaven vorgenommen wird. Nach dem Trocknen und Mahlen wird ein leuchtend gelbes Pulver erhalten.

**Beispiel 5**

Acrylnitril-Copolymer-Hydrochlorid

10 Gewichtsteile Polyacrylnitril und 5 Gewichtsteile Dicyandiamid werden unter Rühren und Erwärmen im Wasserbad in 100 Gewichtsteilen Dimethylformamid gelöst. Sobald vollständige Lösung eingetreten ist, wird die farblose Polymerlösug, deren Temperatur 358 K beträgt, mit 3 Gewichtsteilen Kaliumhydroxid in 3 Gewichtsteilen Wasser versetzt. Es tritt sofort eine Braunfärbung auf, die nach wenigen Minuten von einem Gelieren der Reaktionsmasse begleitet wird.

Unter fortgesetztem Rühren bei 373 K homogenisiert sich das Gel zu einer Suspension. Diese Suspension wird 3 Stunden bei 368 K gerührt und anschließend mit 62 Gewichtsteilen einer 8,5 %-igen Salzsäure versetzt. Unter Erwärmen auf 368 K löst sich die Suspension im Verlauf von 0,5 h auf. Aus der orangefarbenen Lösung scheidet sich beim Abkühlen das Acrylnitril-Copolymer -Hydrochlorid aus.

Es wird abfiltriert, mit 16,0 Gewichtsteilen Wasser das Dimethylformamid ausgewaschen und bei 313 K im Vakuum getrocknet. Nach 2stündigem Mahlen in der Kugelmühle erhält man ein gelbes Pulver.

**Patentansprüche**

1. Acrylnitril-Copolymer mit verzweigter, zyklisierter Struktur, wobei das Polymer Acryloguanaminstrukturen neben Acrylnitril- und Tetrahydronaphthyridinringstrukturen enthält, gekennzeichnet dadurch, daß die Substanz ein Polymer gemäß Formel I darstellt,

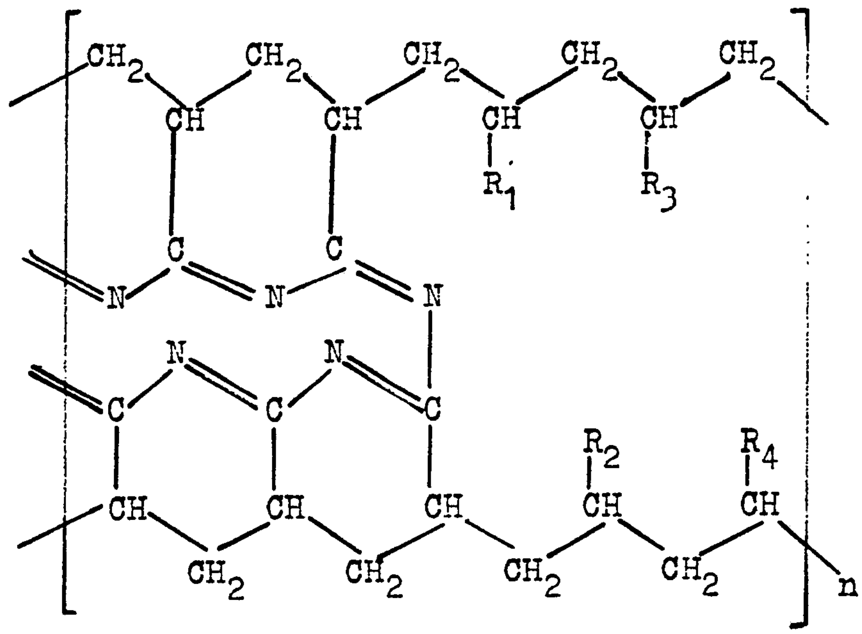

in der $R_1$ = -C≡N
$R_2$ = Guanamin oder Guanaminhydrochlorid

$R_3$ = 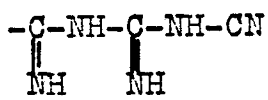

$R_4$ = $-CONH_2$, COOH
n = 5 bis 150

bedeuten, wobei das Polymer im solartigen oder im gelösten Zustand vorliegt.

2. Verfahren zur Herstellung von Acrylnitril-Copolymeren durch Umsetzung von Polyacrylnitril oder Acrylnitril-Copolymeren mit Dicyandiamid in alkalischer Lösung, gekennzeichnet dadurch, daß das entstandene Gel unter Erwärmung durch intensive und langandaurende Scherbeanspruchung in Gegenwart hoher Alkalikonzentrationen > 1 Masse %, bezogen auf den Polyacrylnitrilgehalt der Lösung, und Temperaturen zwischen 293 K und dem Siedepunkt des Polymerlösungsmittels irreversibel in den solartigen Zustand überführt, anschließend mindestens bis zum Erreichen des gelösten Zustandes, höchstens bis zu 10 h, mit einer 1 : 1 bis 1 : 100fachen molaren Menge an Säure, bezogen auf die zur Umsetzung des Polyacrylnitrils mit Dicyandiamid verwendete Menge an Basen bei Temperaturen zwischen 323 und dem Siedepunkt des Lösungsmittelgemisches bzw. unter Druck bis 573 K behandelt und nachfolgend das Polymer in bekannter Weise gegebenenfalls neutralisiert, danach abgekühlt, abgetrennt, getrocknet und zerkleinert wird.

3. Verfahren nach Anspruch 2, gekennzeichnet dadurch, daß die Scherbeanspruchung durch intensives, langandauerndes Rühren erfolgt.

4. Verfahren nach Anspruch 2, gekennzeichnet dadurch, daß für die Säurebehandlung organische oder anorganische Säuren oder saure Salze eingesetzt werden.

## Claims

1. An acrylonitrile-copolymer with branched, cyclisized structure whereby the polymer contains acrylguanamin structures, beside acrylonitrile- and tetrahydronaphtyridine ring structures; characterised in that the substance represents a polymer according to formula I,

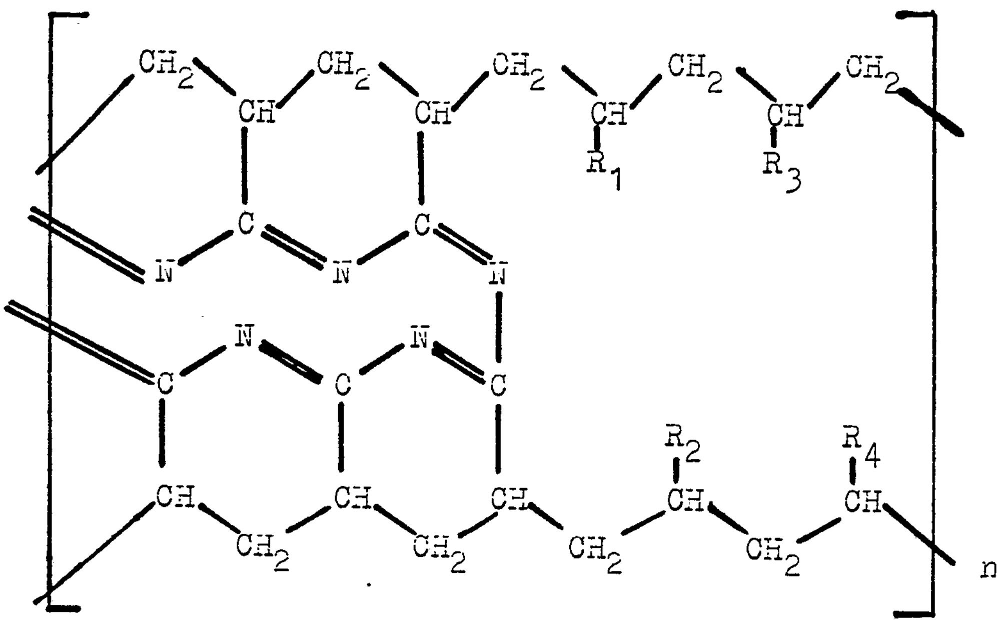

where $R_1$ = - C≡N
$R_2$ = guanamin or guanaminhydrochloride

$R_3$ = 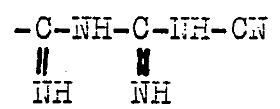

$R_4$ = $-CONH_2$, COOH
n = 5 to 150
and where the polymer is in a sol-like or dissoloed state.

2. A process for the preparation of acrylonitrile-copolymers by reaction of polyacrylonitrile or acrylonitrile-copolymers with dicyandiamide in alkaline solution, characterised in that the resulting gel is irreversible transferred into a sol-like state by heating under intensive and long-time shear stress in the presence of high alkali concentrations 1 mass %, based on the polyacrylonitrile content of the solution, followed, at least until the dissolved state is reached, not exceeding 10 hours, by treatment with a 1 : 1 to 1 : 100-fold molar amount of acid, based on the amount of bases used in the reaction of polyacrylonitrile with dicyandiamide at temperatures between 323 and the boiling point of the solvent mixture and under pressure up to 573 K and subsequently the polymer is neutralised in the known art if necessary, cooled, separated, dried and disintegrated.

3. A process according to claim 2, characterized in that the shear stress is performed by intensiv stirring over a long period.

4. A process according to claim 2, characterised in that for the treatment with acids organic or inorganic acids or acid salts were employed.

**Revendications**

1. Copolymère d'acrylonitrile, de structure ramifiée et cyclisée, dans lequel le polymère comporte des structures acryloguanaminiques ainsi que des structures d'acrylonitrile et de tétrahydronaphtyridine cyclique, caractérisé en ce que la substance peut être représentée par un polymère de formule I,

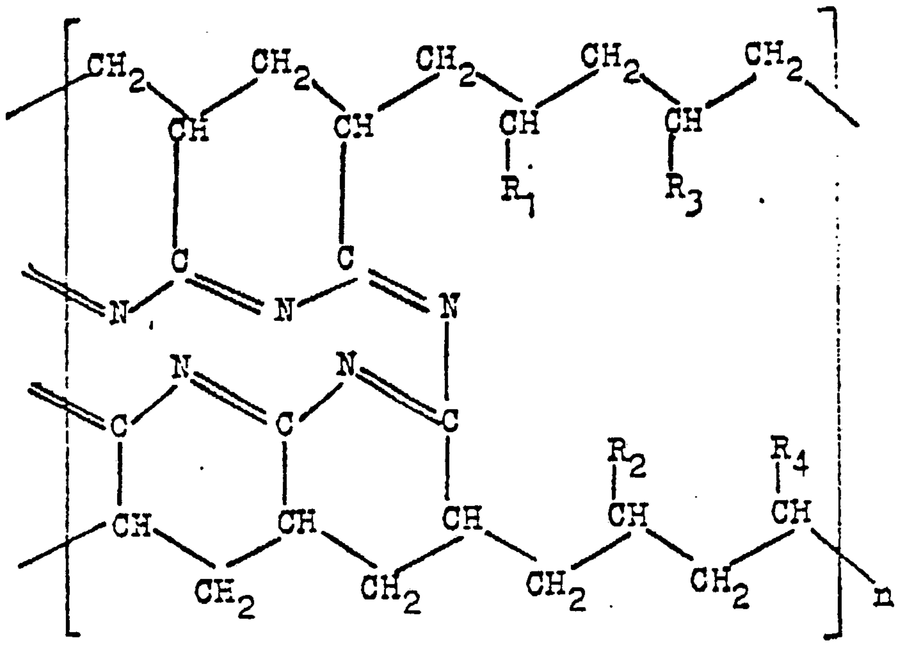

dans laquelle $R_1 = -C{\equiv}N$

$R_2$ = guanamine ou chlorhydrate de guanamine

$R_3$ =

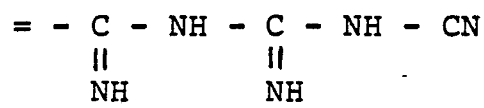

$R_4 = -CONH_2$, COOH

n = 5 à 150

tandis que le polymère se présente dans un état dissous ou sous l'aspect d'un sol.

2. Procédé pour la fabrication de copolymères d'acrylonitrile par réaction de polyacrylonitrile ou de copolymères d'acrylonitrile avec le dicyanodiamide en solution alcaline, caractérisé en ce qu'on fait passer de façon irréversible le gel qui s'est formé à l'état de sol à chaud en le soumettant à une sollicitation de cisaillement intensive et de longue durée, en présence de concentrations élevées de bases, dépassant 1 % de la masse par rapport à la teneur en polyacrylonitrile dans la solution, et à des températures entre 293°K et le point d'ébullition du solvant du polymère, en ce qu'on le traite ensuite au moins jusqu'à l'obtention d'un état de dissolution, pendant une période de temps atteignant au maximum 10 h, avec une quantité d'acide de 1 : 1 à 1 : 100 fois molaire par rapport à la quantité de bases employée pour la réaction du polyacrylonitrile avec le dicyanodiamide à des températures entre 323° et le point d'ébullition du mélange de solvants éventuellement sous pression jusqu'à 573°K, et qu'on neutralise par la suite le cas échéant le polymère de façon connue, puis qu'on le refroidit, sépare, sèche et fragmente.

3. Procédé selon la revendication 2, caractérisé en ce que la sollicitation de cisaillement est appliquée par une agitation intense et de longue durée.

4. Procédé selon la revendication 2, caractérisé en ce qu'on utilise, pour le traitement acide, des acides organiques ou minéraux, ou des sels acides.